# EUROPEAN PATENT APPLICATION

(11) **EP 2 924 469 A1**
(43) Date of publication of application: **30.09.2015**
(21) Application number: 15161207.4
(22) Date of filing: 26.03.2015
(51) Int. Cl.: G01S 19/48, G01S 5/02

(54) **Information system and method**

(30) Priority: 27.03.2014 EP 14162114
(71) Applicant: Sinvent AS, 7465 Trondheim (NO)
(72) Inventor: Morrison, Aiden, 7465 Trondheim (NO); Sokolova, Nadezda, 7465 Trondheim (NO)
(74) Representative: Haley, Stephen

(57) **Abstract**

A system for providing information to a client mobile device, the system comprises an intermediary mobile device configured to receive position information from a position location system and configured to calculate its position uncertainty and to transmit the position information and position uncertainty to a client mobile device; and the client mobile device, comprising one or more inertial sensors arranged to determine inertial data, including at least pedestrian dead reckoning data and status information, and configured to receive position information and position uncertainty of the intermediary mobile device from the intermediary mobile device, wherein the client mobile device is configured to change its mode of operation when a position location signal from the position location system is below a predetermined threshold or is unavailable at the client mobile device; wherein the intermediary mobile device and the client mobile device are arranged to exchange ranging data using a wireless communication protocol, and wherein the client mobile device is configured to calculate, based on at least the position information and position uncertainty of the intermediary mobile device, the inertial data of the client mobile device and the ranging data of the intermediary mobile device and the client mobile device, its estimated position. A method for providing information to a client mobile device is also provided.

## Description

The present invention relates to a method and system for providing location data in areas where there is absence of a satellite navigation system signals required to determine the location of a device.

There are many devices, such as mobile telephones, smart phones and handheld PDAs that now use satellite navigation systems to provide appropriate functionality for a number of location-based services. However, there are areas, most notably within buildings, where such devices are unable to receive signals from a positioning satellite and are therefore unable to provide location-based services in the ways that a user has come to expect.

Attempts have been made to overcome such problems by providing one or more fixed nodes in a location where a satellite positioning signal is either weak or non-existent. The one or more nodes are then able to provide location information to a mobile device so that the mobile device is able to determine its location.

For example, systems have been proposed which utilise gateway nodes (non-mobile wall-powered nodes to connect or interface the system to an external computer or computer network), static nodes (non-mobile wall-powered nodes that act as a reference for the rest of the nodes) and mobile nodes (mobile battery-powered nodes to be located).

However, such systems require additional infrastructure and therefore additional expense. Furthermore, they have to be positioned correctly within the space for which location information is to be provided to ensure appropriate levels of coverage for mobile devices within the space. Such additional infrastructure is particularly cumbersome in military and emergency service applications where the conditions are often not suitable for installing the additional equipment.

The present invention seeks to provide a system and method which enables mobile devices to obtain their location even in the absence of satellite positioning signals whilst avoiding the need to install additional infrastructure within the area that is not covered by the satellite positioning signal.

Thus, according to the present invention, there is provided a system for providing information to a client mobile device, the system comprising: an intermediary mobile device configured to receive position information from a position location system and configured to calculate its position uncertainty and to transmit the position information and position uncertainty to a client mobile device; and the client mobile device, comprising one or more inertial sensors arranged to determine inertial data, including at least pedestrian dead reckoning data and status information, and configured to receive position information and position uncertainty of the intermediary mobile device from the intermediary mobile device, wherein the client mobile device is configured to change its mode of operation when a position location signal from the position location system is below a predetermined threshold or is unavailable at the client mobile device; wherein the intermediary mobile device and the client mobile device are arranged to exchange ranging data using a wireless communication protocol, and wherein the client mobile device is configured to calculate, based on at least the position information and position uncertainty of the intermediary mobile device, the inertial data of the client mobile device and the ranging data of the intermediary mobile device and the client mobile device, its estimated position.

With the present invention, a user of a client mobile device can collaboratively navigate indoors without direct access to a position location system at low or no additional cost to existing hardware, and without need for dedicated infrastructure. The position location system may be, for example, a global navigation satellite system such as GPS or GLONASS, or a regional positional system such as LORAN. In some examples, the intermediary mobile device may communication directly with the position location system (thus acting as a "provider" of position information to the client mobile device). In other examples, the intermediary mobile device may have indirectly acquired its position information from the position location system, for example, via another mobile device, a WiFi hotspot, Bluetooth beacons, infrared systems, magnetic gradient mapping or any other optical, radio or acoustic systems.

The client mobile device may have no or limited access to signals from the position location system. The client mobile device is configured to receive position information and position uncertainty of the intermediary mobile device from the intermediary mobile device, which is configured to receive position information from a position location system and to calculate its own position uncertainty, which allows the client mobile device to indirectly communicate with the position location system.

The provision of collaborative ranging data exchange using a wireless communication protocol also permits the present invention to provide a system that has improved accuracy.

The present invention finds particular advantages in military and emergency service applications, for example, in the battle field, where it is particularly desirable for soldiers to have access to a flexible and reliable system that provides information to them. By way of example, the provision of the pedestrian dead reckoning data and the status information are linked in this particular application in that a user of the client mobile device may take both into consideration and in that the status information may be wholly or partially dependent upon the pedestrian dead reckoning data in order to improve its accuracy.

In one example, the pedestrian dead reckoning data could be used for step detection and said data may be used to detect and characterise the footfalls of a user of the system, for example, in terms of their stride length and cadence. In another example, the pedestrian dead reckoning data and status information of two or more mobile client devices may be considered together, for example, in the situation that two or more users of said client mobile devices are known to be travelling together, and so said two or more proximate client mobile devices should have substantially the same pedestrian dead reckoning derived velocity and the vector and/or relative distance between them may be assumed to be fixed. Using this assumption, the information derived from the inertial sensors may be more accurate because the performance benefits from the locking of their relative positions, thus reducing the error growth rate in their heading solution. In yet another example, when a sudden drop in altitude (via the barometer if present or inertial sensor) is detected coincident with a spike in acceleration rate of change (e.g. close to zero g in free fall, then multiple g as the user hits the floor), the user may be assumed to have 'hit the deck'.

Preferably, the wireless communication protocol is IEEE 802.15.4a, which may utilise a chirp spread spectrum (CSS) ranging method or an ultra-wideband ranging method. The protocol may feed, for example, an internal Kalman filter such that the system always uses global coordinates and never local coordinates. (Other filters such as particle filters or other architecture filters may be used in addition to or in replacement of the Kalman filter.) This way, the derived estimated position information of the client mobile device does not need to be converted from local coordinates to global coordinates. This is advantageous because if the system used local coordinates, then two mobile devices that are passing between two areas, for example, two buildings that define their local coordinate frames differently from one another, say one has its X axis pointing East while the other has its pointing Northwest due to the architecture, would have no frame of reference to share information. By keeping everything in global coordinates (the earth frame), any information received by a mobile device is instantly applicable and compatible.

By forming ranging estimates to other mobile devices and exchanging ranging data bi-directionally between the intermediary mobile device and the client mobile device, it is possible for each mobile device within a certain range to act as a "pseudolite" (pseudo-satellite) to the other mobile devices. Mobile devices that are stationary can anchor other mobile devices, while mobile devices that have unobstructed access to a position location system can provide absolute position references.

The client mobile device can therefore calculate, based on the position information and position uncertainty of the intermediary mobile device, the inertial data of the client mobile device, and the ranging data of both the intermediary and client mobile devices, its own estimated position. Advantageously, there is no need for any additional infrastructure to be put in place and so the costs associated with static nodes can be avoided.

The client mobile device comprises one or more inertial sensors arranged to determine inertial data or the client mobile device, including at least pedestrian dead reckoning data and status information. Advantageously, said inertial sensors allow the client mobile device to create new estimated position information based on its own internal measurements and, in doing so, neither relies on the position location system nor other users such as the intermediary mobile device for short periods of time. The inertial sensors perform two further functions that improve the utility, capability and accuracy of the system. The first function is maintaining estimates when the mobile device is not in direct communication with the position location system. The second function is combining information over periods of time, for example, such that an average and/or composite value may be determined.

Preferably, the intermediary mobile device may comprise one or more inertial sensors arranged to determine inertial data of the intermediary mobile device, including at least pedestrian dead reckoning data and status information. More preferably, the intermediary mobile device may be further configured to transmit its inertial data to the client mobile device, which, may receive said inertial data and calculate its estimated position based further on said inertial data of the intermediary mobile device.

The client mobile device and/or the intermediary mobile device may further comprise one or more magnetometers arranged to determine magnetometry data. Preferably, if the magnetometry data is determined for the client mobile device, then the client mobile device may calculate its estimated position based further on said magnetometry data. Preferably, if the magnetometry data is determined for the intermediary mobile device, then said magnetometry data may be transmitted to the client mobile device, which may calculate its estimated position based further on said magnetometry data. Magnetometry data is useful for two reasons. One use is related to the detection and use of 'quasi-static-fields' indoors. This means that the magnetic field information can be used to help detect when the user is holding a constant heading/roll/pitch over short time periods. The second use is that one can start to build up a magnetic map of the location of the client mobile device and/or the intermediary mobile device and use it to detect when you pass through the same area again and 'close the loop' which happens frequently in buildings.

Preferably, the client mobile device may be configured to operate as an intermediary mobile device and/or the intermediary mobile device may be configured to operate as a client mobile device. In effect, the operation of each of the intermediary mobile device and the client mobile device are interchangeable at any moment in time and the direction of communication of the wireless communication protocol may change to accommodate this.

The intermediary mobile device and/or the client mobile device of the system of the present invention may further comprise one or more barometric sensors arranged to determine barometric data. Preferably, if the barometric data is determined for the client mobile device, then the client mobile device may calculate its estimated position based further on said barometric data. Preferably, if the barometric data is determined for the intermediary mobile device, then said barometric data may be transmitted to the client mobile device, which may calculate its estimated position based further on said barometric data. Therefore, barometric data may be exchanged between the intermediary mobile device and the client mobile device over the wireless communication protocol to improve the accuracy of the system. Individual barometers can have biases of multiple metres, as well as bounded but still metre level drifts over time; sharing the information allows these biases and drifts to average out over groups of proximate devices. One example where this provides for particular advantages is during initialisation when all the users of the devices are outdoors together and they exchange altitude and barometric pressure data and force initialise each device to the average value. This may advantageously reduce the distribution of pressure altitudes from +/- 5 metres to 10's of cm.

The intermediary mobile device and/or the client mobile device of the system of the present invention may further comprise one or more heart-rate monitors, In this case, the status information of the inertial sensor(s) may be wholly or partially dependent upon the heart rate information.

Preferably, the client mobile device may be further configured to send its estimated position to the intermediary mobile device and the intermediary mobile device may be further configured to receive the estimated position information of the client mobile device from the client mobile device. By exchanging position information of the intermediary mobile device and the client mobile device bi-directionally, the accuracy of the system may be improved. In some embodiments of the present invention, the system may comprise a plurality of intermediary mobile devices. In this case, each of the intermediary mobile devices may be configured to receive position information from a position location system and configured to calculate its position uncertainty. Additionally or alternatively, the system may comprise a plurality of client mobile devices. Therefore, each of the plurality of client mobile devices may be configured to receive position information and position uncertainty of the one or more intermediary mobile devices from the one or more intermediary mobile devices.

In the embodiment of the present invention wherein the system comprises a plurality of intermediary mobile devices and a plurality of client mobile devices, an intermediary mobile device may be configured to operate as a client mobile device, for example, if it should become unable to receive position information from a position location system any more. Similarly, a client mobile device which initially has no or limited access to signals from a position location system and which subsequently acquires such signals may be configured to then operate as an intermediary mobile device. Advantageously, this provides a degree of flexibility to the system of the present invention, which accommodates the movement of the mobile devices from locations where there is adequate signal from a position location system to locations where there is no or limited signal from a position location system, and vice versa.

Preferably, each of the mobile devices may be arranged to exchange ranging data with the other mobile devices using a wireless communication protocol. Such ranging data, along with the position information and position uncertainty of the intermediary mobile device(s), are used to allow the client mobile devices to calculate their estimated position information. As such, the more ranging data that is provided, the more accurately the system of the present invention is able to operate, and thus the more accurate the estimated position information of the client mobile devices.

In some embodiments of the system of the present invention, the or each client mobile device may be configured to calculate its estimated position using Kalman filtering techniques.

According to the present invention, there is also provided a method for providing information to a client mobile device, the method comprising: receiving at an intermediary mobile device position information from a position location system and calculating position uncertainty of the intermediary mobile device; changing a mode of operation of a client mobile device when a position location signal from the position location system is below a predetermined threshold or is unavailable at the client mobile device; transmitting the position information and position uncertainty of the intermediary mobile device to the client mobile device; receiving at the client mobile device the position information and position uncertainty of the intermediary mobile device; determining inertial data of the client mobile device, including at least pedestrian dead reckoning data and status information, using one or more inertial sensors of the client mobile device; exchanging, via a wireless communication protocol, ranging data between the intermediary mobile device and the client mobile device; and estimating the position of the client mobile device based on at least the position information and position uncertainty of the intermediary mobile device, the inertial data of the client mobile device and the ranging data of the intermediary mobile device and the client mobile device.

The wireless communication protocol may preferably be IEEE 802.15.4a. It should be noted that the same technical advantages arise for this method as for the system configured to perform said method as described above.

Preferably, the client mobile device may be configured to operate as an intermediary mobile device and/or the intermediary mobile device may be configured to operate as a client mobile device.

Preferably, the method may further comprise determining inertial data of the intermediary mobile device, including at least pedestrian dead reckoning data and status information, using one or more inertial sensors of the intermediary mobile device. More preferably, the method may further comprise transmitting from the intermediary mobile device its inertial data to the client mobile device, and yet more preferably, receiving at the client mobile device said inertial data and calculating its estimated position based further on said inertial data of the intermediary mobile device.

The method may further comprise determining magnetometry data of either the client mobile device or the intermediary mobile device using one or more magnetometers. Preferably, if the magnetometry data is determined for the client mobile device, then the method may further comprise calculating at the client mobile device its estimated position based further on said magnetometry data of the client mobile device. Preferably, if the magnetometry data is determined for the intermediary mobile device, then the method may further comprise transmitting said magnetometry data to the client mobile device, and calculating at the client mobile device its estimated position based further on said magnetometry data of the intermediary mobile device. For example, inside a building, the earth's magnetic field is badly corrupted by construction material, so finding directions, e.g. north, is difficult or impossible with any accuracy. However, magnetometers are useful for detecting when the user of the device is rotating (or not) which helps improve attitude accuracy. Similarly, using the magnetometry data, one can build up a map of the indoor magnetic environment and detect when you pass the same spot via the magnetic field which helps improve position accuracy (if this loop closure is detected).

The method of the present invention may further comprise determining barometric data of the intermediary mobile device and/or client mobile device using one or more barometric sensors of the intermediary mobile device and/or the client mobile device. Preferably, if the barometric data is determined for the client mobile device, then the method may further comprise calculating at the client mobile device its estimated position based further on said barometric data of the client mobile device. Preferably, if the barometric data is determined for the intermediary mobile device, then the method may further comprise transmitting said barometric data to the client mobile device, and calculating at the client mobile device its estimated position based further on said barometric data of the intermediary mobile device. Therefore, barometric data may be exchanged between the intermediary mobile device and the client mobile device over the wireless communication protocol to improve the accuracy of the system. Barometers have large 'turn-on' biases and usually drift a small amount over time. By sharing barometric data, we can average out this initial bias over the devices of the system and also constrain the error growth in the barometer bias over time, which in turn helps the vertical accuracy of all the devices in the system.

The method of the present invention may further comprise determining heart rate information using one or more heart-rate monitors of the intermediary mobile device and/or the client mobile device. In this case, the status information of the inertial sensor(s) may be wholly or partially dependent upon the heart rate information.

Preferably, the method further may comprise sending the estimated position of the client mobile device to the intermediary mobile device and receiving at the intermediary mobile device the estimated position information of the client mobile device from the client mobile device.

In some embodiments of the present invention, the method steps are performed at each of a plurality of intermediary mobile devices and/or each of a plurality of client mobile devices. Thus, the method may further comprise receiving at a plurality of intermediary mobile devices a signal from a position location system and determining position information and position uncertainty of said mobile device(s). In this case, each of the intermediary mobile devices may be configured to receive position information from a position location system and configured to calculate its position uncertainty. Additionally or alternatively, the method may further comprise changing a mode of operation of a plurality of client mobile devices where a position location signal from the position location system is below a predetermined threshold or is unavailable at said mobile device(s). Therefore, each of the plurality of client mobile devices may be configured to receive position information and position uncertainty of the one or more intermediary mobile devices.

Preferably, the step of estimating the position of the or each client mobile device may be performed using Kalman filtering techniques.

Preferably, the method may further comprise transmitting the position information and position uncertainty of the plurality of intermediary mobile devices to the plurality of client mobile devices, and receiving at the plurality of client mobile devices the position information and position uncertainty of the plurality of intermediary mobile devices.

Preferably, the method may further comprise exchanging, via the wireless communication protocol, ranging data between the plurality of intermediary mobile devices and the plurality of client mobile devices.

Preferably, the method may further comprise estimating the position of each of the plurality of client mobile devices based on the position information and position uncertainty of the plurality of intermediary mobile devices and the ranging data between the plurality of intermediary mobile devices and the plurality of client mobile devices.

Certain preferred embodiments of the present invention will now be described by way of example only with reference to the accompanying drawings, in which:
Figure 1A is a schematic diagram of a position information system according to an embodiment of the present invention;
Figure 1B is a flow diagram showing the method steps of a position information determination method according to an embodiment of the present invention;
Figure 2 is a schematic diagram of a position information system according to another embodiment of the present invention;
Figure 3 illustrates a position information system according to yet another embodiment of the present invention;
Figure 4 is a graph showing the accuracy of the position information system of an embodiment of the present invention;
Figure 5A illustrates the position uncertainty of a single mobile device of a system of an embodiment of the present invention over time; and
Figure 5B illustrates the position uncertainty of two mobile devices of a system of an embodiment of the present invention over time.

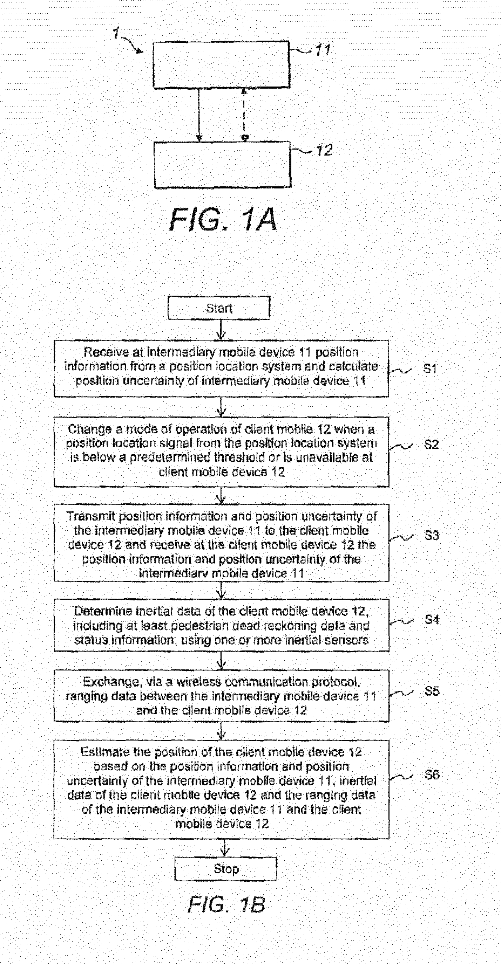

Referring to Figure 1A, a schematic of a position information system 1 according to an embodiment of the present invention is shown. An intermediary mobile device 11 receives signals representing position information from a plurality of satellites. However, a client mobile device 12 is unable to receive signals from such satellites to receive adequate position information. Intermediary mobile device 11 transmits its position information to client mobile device 12 (shown by the solid arrow) and mobile devices 11, 12 exchange ranging data (shown by the dotted arrow) using a wireless communication protocol such as IEEE 802.15.4a. The client mobile device 23 comprises one or more inertial sensors arranged to determine inertial data, including at least pedestrian dead reckoning data and status information. The client mobile device calculates, cased on the position information and position uncertainty of the intermediary mobile device 11, the inertial data (including at least pedestrian dead reckoning data and status information) of the client mobile device 12 and the ranging data of the intermediary mobile device 11 and the client mobile device 12, its estimated position.

In Figure 1B, a flow diagram of showing the method steps of a position information determination method. At step s1, the intermediary mobile device 11 receives position information from a position location system and calculates its position uncertainty. At step s2, a mode of operation of the client mobile device 12 is changed when a position location signal from the position location system is below a predetermined threshold or is unavailable at the client mobile device 12. At step s3, position information and position uncertainty of the intermediary mobile device 11 is transmitted to and received by the client mobile device 12. At step s4, inertial data of the client mobile device 12, including at least pedestrian dead reckoning data and status information, is determined using one or more inertial sensors of the client mobile device 12. At step s5, raging data is exchanged via a wireless communication protocol, between the intermediary mobile device 11 and the client mobile device 12. Finally, at step S6, the position of the client mobile device 12 is estimated based on the position information and position uncertainty of the intermediary mobile device 11, the inertial data of the client mobile device 12 and the ranging data of the intermediary mobile device 11 and the client mobile device 12. It will be appreciated that some or all of the steps of the method of the present invention may be iterated so as to provide the client mobile device with estimations of its position over time.

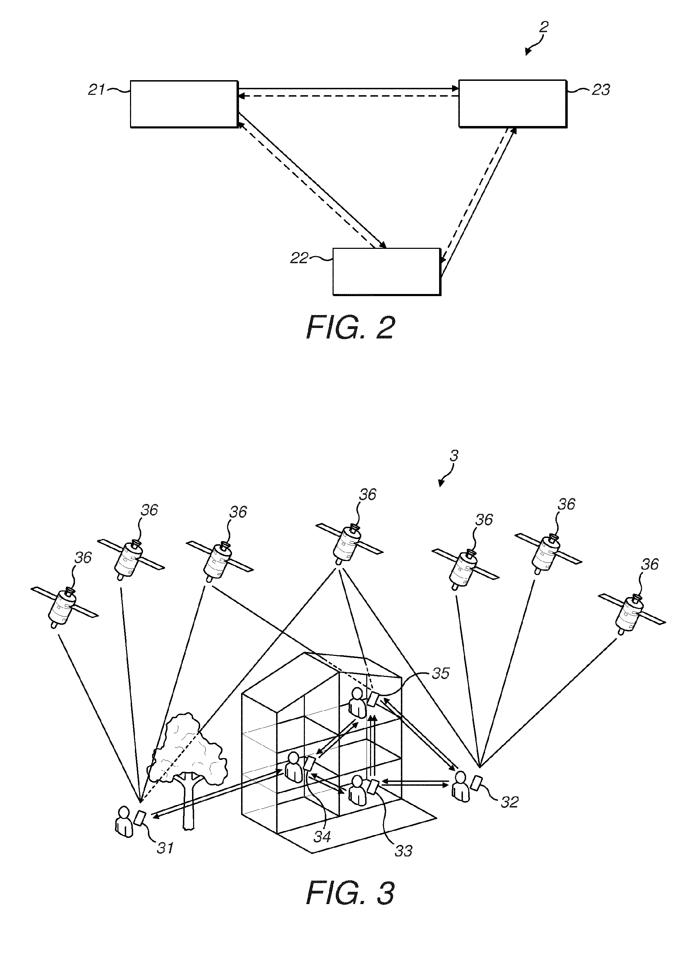

Figure 2 shows a schematic of a position information system 2 according to another embodiment of the present invention, in which the system 2 comprises intermediary mobile devices 21, 22 that receive signals representing position information from a plurality of satellites. Client mobile device 23 is unable to receive signals from such satellites to receive adequate position information and thus intermediary mobile devices 21, 22 may transmit its position information to client mobile device 23 and mobile devices 21, 22, 23 may exchange ranging data using a wireless communication protocol such as IEEE 802.15.4a. The client mobile device 23 comprises one or more inertial sensors arranged to determine inertial data, including at least pedestrian dead reckoning data and status information. The client mobile device calculates, based on the position information and position uncertainty of the intermediary mobile devices 21, 22 the inertial data of the client mobile device 23 and the ranging data of the intermediary mobile devices 21, 22 and the client mobile device 23, its estimated position. An advantage of the system comprising two intermediary mobile devices 21, 22 instead of just one intermediary mobile device (as in Figure 1A) is that the client mobile device 23 may estimate its position with greater accuracy.

With reference now to Figure 3, a position information system 3 is shown. Intermediary mobiles devices 31, 32 receive signals representing position information from a number of a plurality of satellites 36. Mobile device 35 may receive some weak signals from a number of a plurality of satellites 36 and so may operate as either intermediary mobile devices or client mobile devices. Client mobile devices 33, 34 are inside the building and thus unable to receive signals from a number of a plurality of satellites 36.

Each of the mobile devices 31, 32, 33, 34, 35 can exchange ranging data, which allows the client mobile devices 33, 34 to calculate their estimated position based upon said ranging data, the position information and position uncertainty from at least one of intermediary mobile devices 31, 32, and its own inertial data from one or more inertial sensors at either of the client mobile devices 33, 34.

It should be understood that any of mobile devices 31, 32, 33, 34, 45 may be configured to change their mode of operation from an intermediary mobile device to a client mobile device, and vice versa, at any given moment in time depending on the strength of signal that they are receiving from the plurality of satellites and/or the extent of ranging data exchange between the mobile devices.

It should also be understood that any of mobile devices 31, 32, 33, 34, 45 may operate as both an intermediary mobile device and a client mobile device simultaneously in relation to other mobile devices at any given moment in time. For example, a mobile device that is located in between two other mobile devices in physical space, wherein the two outer mobile devices are too far apart to communicate with one another over a wireless communication protocol, may act as a both an intermediary mobile device and a client mobile device to each of the two outer mobile devices, and each of the two outer mobile devices may act as both an intermediary mobile device and a client mobile device to the mobile device located therebetween.

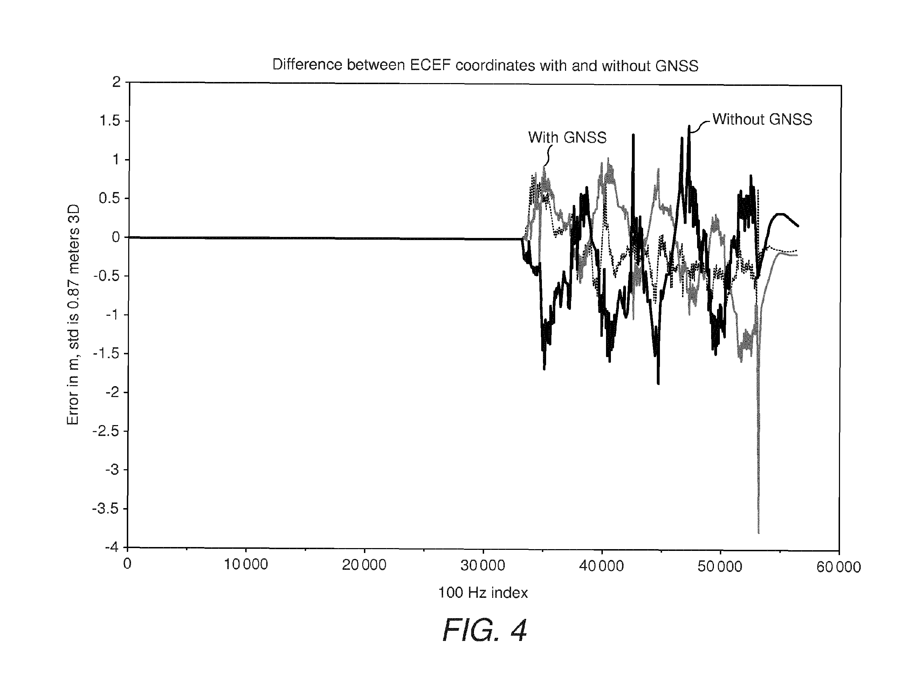

The advantage of a system comprising a network of mobile devices such that client mobile devices 33, 34 receive position information and position uncertainty from a plurality of intermediary mobile devices is that the accuracy of the system is improved compared with when client mobile devices 33, 34 receive position information and position uncertainty from only one intermediary mobile device. Additional advantages derived from a network of mobile devices include RAIM (receiver autonomous integrity monitoring) or other integrity monitoring methods, which allows malfunctioning nodes to be dynamically removed from use, and it also protects mobile devices from satellites that are malfunctional as well as malicious users who might try and compromise local navigation. Figure 4 is a graph that illustrates the results of a test of a system of yet another embodiment of the present invention. In this embodiment, four mobile devices were used to evaluate the performance of the system of the present invention that is achievable when a client mobile device is completely unable to access signals, e.g. GPS or GLONASS signals, from a position location system. The client mobile device can, however, communicate with three nearby intermediary mobile devices using a wireless communication protocol such as IEEE 802.15.4a.

In this test, two of the intermediary mobile devices were placed stationary at two separate locations, say 20 metres apart, and the other intermediary mobile device was held by a user who was not stationary. The client mobile device was held by a different user and also not stationary. At index 33 000 in the graph, the GPS receiver of the client mobile device was disabled. For the next three minutes, the client mobile devices operation without any GPS signal and communicated only with the three nearby intermediary mobile devices in the collaborative navigation network via a wireless communication network. it can be seen from the graph that the three dimensional deviation or RMS position error of the client mobile device was about 87 cm.

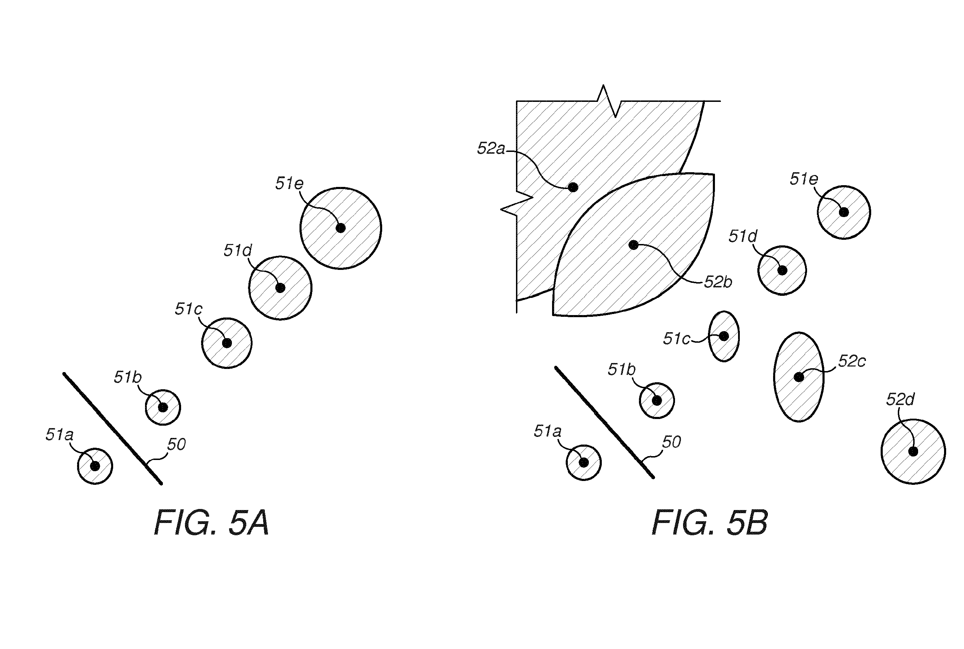

Figures 5A and 5B show diagrammatic examples of how position uncertainty of mobile devices of an embodiment of a system of the present invention changes over time. These examples may apply to any of the embodiments described above.

At Figure 5A, the position uncertainty of a single mobile device is illustrates as the user moves from the lower left-hand corner to the upper right-hand corner of the Figure. When the mobile device 51 a is outside and in receipt of GPS signal from various satellites, its position uncertainty is shown by the hatched ring encompassing it. As the user carries mobile device 51 b through door 50 inside a building, an inertial sensor of the mobile device may retain the position information that it acquired outside for a few seconds, thus its position uncertainty is effectively as good as when it was outside. As the mobile device 51 c, 51 d, 51e travels further inside the building, its position uncertainty deteriorates over time.

Figure 5B illustrates the position uncertainty of two mobile devices that exchange ranging data and their estimated position information with one another. The first mobile device 51 is still shown to move from the lower left-hand corner to the upper right-hand corner of the Figure, and the second mobile device 52 is shown to move from the upper left-hand corner to the lower right-hand corner of the Figure concurrently. Compared with Figure 5A, the position uncertainty of the first mobile device 51 c, 51 d, 51 e is improved because it is able to collaborate with the second mobile device 52. Further, the position uncertainty of the second mobile device 52 is also greatly improved as it collaborates with the first mobile device 51. It should be understood that in this example, mobile devices 51, 52 may each act as intermediary mobile devices and client mobile devices simultaneously.

## Claims

1. A system for providing information to a client mobile device, the system comprising:
an intermediary mobile device configured to receive position information from a position location system and configured to calculate its position uncertainty and to transmit the position information and position uncertainty to a client mobile device; and
the client mobile device, comprising one or more inertial sensors arranged to determine inertial data, including at least pedestrian dead reckoning data and status information, and configured to receive position information and position uncertainty of the intermediary mobile device from the intermediary mobile device,
wherein the client mobile device is configured to change its mode of operation when a position location signal from the position location system is below a predetermined threshold or is unavailable at the client mobile device;
wherein the intermediary mobile device and the client mobile device are arranged to exchange ranging data using a wireless communication protocol,
and wherein the client mobile device is configured to calculate, based on at least the position information and position uncertainty of the intermediary mobile device, the inertial data of the client mobile device and the ranging data of the intermediary mobile device and the client mobile device, its estimated position.

2. A system according to claim 1, wherein the client mobile device is configured to operate as an intermediary mobile device and/or the intermediary mobile device is configured to operate as a client mobile device.

3. A system according to claim 1 or 2, where the intermediary mobile device comprises one or more inertial sensors arranged to determine inertial data, including at least pedestrian dead reckoning data and status information.

4. A system according to any preceding claim, wherein the intermediary mobile device and/or the client mobile device further comprises one or more barometric sensors arranged to determine barometric data.

5. A system according any preceding claim, wherein the client mobile device is further configured to send its estimated position to the intermediary mobile device and the intermediary mobile device is further configured to receive the estimated position of the client mobile device from the client mobile device.

6. A system according to any preceding claim, wherein the system comprises a plurality of intermediary mobile devices and/or a plurality of client mobile devices.

7. A system according to claim 6, wherein each of the mobile devices are arranged to exchange ranging data with the other mobile devices using a wireless communication protocol.

8. A system according to any preceding claim, wherein the or each client mobile device is configured to calculate its estimated position using Kalman filtering techniques.

9. A method for providing information to a client mobile device, the method comprising:
receiving at an intermediary mobile device position information from a position location system and calculating position uncertainty of the intermediary mobile device;
changing a mode of operation of a client mobile device when a position location signal from the position location system is below a predetermined threshold or is unavailable at the client mobile device;
transmitting the position information and position uncertainty of the intermediary mobile device to the client mobile device;
receiving at the client mobile device the position information and position uncertainty of the intermediary mobile device;
determining inertial data of the client mobile device, including at least pedestrian dead reckoning data and status information, using one or more inertial sensors of the client mobile device;
exchanging, via a wireless communication protocol, ranging data between the intermediary mobile device and the client mobile device; and
estimating the position of the client mobile device based on at least the position information and position uncertainty of the intermediary mobile device, the inertial data of the client mobile device and the ranging data of the intermediary mobile device and the client mobile device.

10. A method according to claim 9, wherein the client mobile device is configured to operate as an intermediary mobile device and/or the intermediary mobile device is configured to operate as a client mobile device.

11. A method according to claim 9 or 10, wherein the method further comprises determining inertial data of the intermediary mobile device, including at least pedestrian dead reckoning data and status information, using one or more inertial sensors of the intermediary mobile device.

12. A method according to any of claims 9 to 11, wherein the method further comprises determining barometric data of the intermediary mobile device and/or client mobile device using one or more barometric sensors of the intermediary mobile device and/or the client mobile device..

13. A method according to any of claims 9 to 12, wherein the method further comprises sending the estimated position of the client mobile device to the intermediary mobile device and receiving at the intermediary mobile device the estimated position information of the client mobile device from the client mobile device.

14. A method according to any of claims 9 to 13, wherein the method steps are performed at each of a plurality of intermediary mobile devices and/or each of a plurality of client mobile devices.

15. A method according to any of claims 9 to 14, wherein the step of estimating the position of the or each client mobile device may be performed using Kalman filtering techniques.
